# DEMANDE DE BREVET EUROPEEN

(11) **EP 1 571 025 A1**
(43) Date de publication de la demande: **07.09.2005**
(21) Numéro de dépôt: 05101542.8
(22) Date de dépôt: 01.03.2005
(51) Int. Cl.: B60J 3/02

(54) **Pare-soleil pour véhicule automobile à système de solidarisation de plaque d'information et procédé de fabrication**

(30) Priorité: 02.03.2004 FR 0402166
(71) Demandeur: WAGON SAS, 79302 Bressuire Cédex (FR)
(72) Inventeur: Jincheleau, Michel, 79320 Moncoutant (FR)
(74) Mandataire: Bioret, Ludovic

(57) **Abrégé**

L'invention concerne un pare-soleil (111) pour véhicule automobile, comprenant des moyens de réception d'au moins une plaque d'information (112), lesdits moyens de réception et/ou ladite plaque d'information comprenant des moyens de solidarisation définitive, de façon que l'on puisse associer audit pare-soleil une plaque d'information choisie parmi au moins deux types de plaques d'information disponibles, et que ladite plaque d'information ne puisse pas être séparée dudit pare-soleil après solidarisation.

## Description

Le domaine de l'invention est celui des véhicules automobiles. Plus précisément, l'invention concerne les pare-soleil pour de tels véhicules. Plus précisément encore, l'invention concerne le marquage de ces pare-soleil, par exemple pour des mentions relatives à la sécurité, et notamment à la présence d' « airbags » (coussins gonflables).

Il est en effet souhaitable, et parfois imposé par la législation, d'imposer des mentions de sécurité. Ainsi, en Europe, il est nécessaire d'indiquer la présence d'airbags dans les véhicules. Ceci se fait par un marquage sur les pare-soleil du véhicule.

Actuellement, ce marquage se fait lors de la fabrication du pare-soleil, par exemple par sérigraphie. Bien entendu, il faut prévoir autant de marquages que de langues correspondant aux pays dans lesquels vont être vendus les véhicules. Cette approche pose de nombreux problèmes de logistique. En effet, le fabricant des pare-soleil doit gérer une gamme importante de pare-soleil (autant de produits distincts qu'il y a de langues prévues) avec une gestion spécifique des stocks, des emballages, des quantités, ...

Le même type de problème se pose au constructeur automobile, qui doit choisir parmi les différents pare-soleil à sa disposition le pare-soleil portant une mention dans la bonne langue, en fonction de la destination fmale du véhicule en cours de fabrication. Cela pose des problèmes spécifiques de gestion des pièces livrées par le fabricant de pare-soleil, puis de stockage des véhicules, d'autant plus complexes que, souvent, on ne connaît pas précisément la destination finale du véhicule lors de sa construction.

Cette gestion complexifie donc la fabrication et du montage du pare-soleil, et en augmente le coût, alors qu'il ne s'agit que d'un élément a priori simple du véhicule.

L'invention a notamment pour objectif de pallier ces différents inconvénients de l'art antérieur.

Plus précisément, l'invention a pour but de fournir une technique permettant de simplifier la gestion du marquage des pare-soleil de véhicule automobile, notamment selon plusieurs langues et/ou selon les législations, tant chez le fabricant des pare-soleil que chez le constructeur automobile.

Un autre objectif de l'invention est de fournir une telle technique, permettant d'éviter les risques d'erreurs de montage ou de livraison, pouvant conduire à fournir par exemple à un importateur des véhicules marqués dans une langue qui n'est pas la sienne.

L'invention a également pour objectif de fournir une telle technique qui permette de réduire les coûts.

Un objectif particulier de l'invention est de fournir une telle technique qui ne nécessite pas de moyens spécifiques pour des intervenants autres que le fabricant du pare-soleil et le constructeur.

Ces objectifs, ainsi que d'autres qui apparaîtront plus clairement par la suite, sont atteints selon l'invention à l'aide d'un pare-soleil pour véhicule automobile, comprenant des moyens de réception d'au moins une plaque d'information, lesdits moyens de réception et/ou ladite plaque d'information comprenant des moyens de solidarisation défmitive, de façon que l'on puisse associer audit pare-soleil une plaque d'information choisie parmi au moins deux types de plaques d'information disponibles, et que ladite plaque d'information ne puisse pas être séparée dudit pare-soleil après solidarisation.

Ainsi, un seul type de pare-soleil est fabriqué (pour une gamme, une couleur et un niveau d'équipement donnés), au lieu de plusieurs. Il n'est pas rare de devoir prévoir sept langues différentes, notamment pour des mention de sécurité. L'invention permet alors de diviser par sept le nombre de références de pare-soleil à gérer.

Cette approche permet également de simplifier la gestion des pièces de remplacement.

Par moyens de solidarisation définitive, on entend ici des moyens permettant de garantir que la plaque d'information ne peut pas être séparée du pare-soleil, après son montage sur celui-ci. Ainsi, il ne s'agira pas d'une étiquette classique autocollante qui pourrait être enlevée, mettant alors le véhicule en infraction avec la loi.

Selon un aspect avantageux de l'invention, chacun desdits types de plaques portent des informations dans une langue distincte (et/ou adaptée en fonction de diverses obligations légales), de façon que la solidarisation de ladite plaque puisse être différée par rapport à la fabrication et au montage dudit pare-soleil, ledit montage étant effectué par un constructeur automobile et ladite solidarisation par un tiers, ayant reçu ledit véhicule dudit constructeur.

Ainsi, il est possible de différer le marquage des pare-soleil et donc d'éviter toute erreur. Le fabricant du pare-soleil fabrique un pare-soleil non marqué, que le constructeur monte sur le véhicule. La mise en place de la plaque d'information, adaptée à la langue ou à la législation, peut être montée en dernier ressort, dans le pays concerné, par exemple par l'importateur.

En outre, les traitements effectués tant chez le fabricant de pare-soleil que chez le constructeur automobile sont simplifiés et optimisés.

Selon un mode de réalisation avantageux, chaque pare-soleil est fourni à un constructeur avec un jeu d'au moins deux plaques d'information de types distincts.

Il est également possible que les plaques d'information soient fournies indépendamment, par exemple par lots. Dans ce cas, le fabricant des pare-soleil, ou un autre intervenant, peut fournir ces plaques (au constructeur ou directement au tiers), ou laisser au tiers la charge de se procurer les plaques adéquates.

De façon préférentielle, lesdits moyens de solidarisation définitive comprennent des moyens de clippage.

Il est ainsi possible de fixer les plaques simplement et efficacement, sans outillage. Le clippage est conçu pour qu'une désolidarisation ne soit pas possible.

L'invention concerne également un procédé de fabrication et de montage d'un pare-soleil tel que décrit ci-dessus dans un véhicule automobile. Un tel procédé comprend les étapes suivantes :
- fabrication dudit pare-soleil, comprenant la réalisation d'un logement pour au moins une plaque d'information ;
- réalisation d'au moins deux plaques d'information de types distincts ;
- montage dudit pare-soleil dans un véhicule automobile ;
- sélection d'une desdites plaques d'information, en fonction de la destination géographique dudit véhicule ;
- solidarisation de la plaque d'information sélectionnée audit pare-soleil, de façon définitive.

Avantageusement, lesdites étapes sont réalisées dans au moins trois sites distincts :
- fabrication dudit pare-soleil et réalisation d'au moins deux plaques d'information distinctes dans au moins un premier site (les pare-soleil et les plaques d'information pouvant bien sûr être réalisés dans des sites distincts et selon des cycles indépendants) ;
- montage dudit pare-soleil sur un véhicule dans un deuxième site ;
- fixation d'une desdites plaques sur ledit pare-soleil dans un troisième site.

Cette distribution géographique a un effet technique important, puisqu'elle permet de simplifier fortement les opérations de stockage et de montage, notamment chez le constructeur automobile, et de supprimer les risques d'erreur.

L'invention concerne encore les plaques d'information prévues pour être solidarisées à un pare-soleil tel que décrit ci-dessus, ainsi que les véhicules automobiles comprenant au moins un tel pare-soleil.

D'autres caractéristiques et avantages de l'invention apparaîtront plus clairement à la description suivante d'un mode de réalisation préférentiel de l'invention, donné à titre de simple exemple illustratif et non limitatif, et des dessins annexés parmi lesquels :
- la figure 1 présente de façon schématique la fabrication et le montage d'un pare-soleil et de sa plaque d'information selon l'invention, répartis sur trois sites ;
- la figure 2 illustre, en coupe, un exemple de moyens de solidarisation de la plaque selon l'invention.

L'invention propose donc une nouvelle approche du marquage des pare-soleil. L'exemple décrit par la suite, à titre indicatif, concerne le marquage en plusieurs langues, indiquant la présence d'airbags dans le véhicule. Ce marquage peut bien sûr concerner d'autres informations, sous la forme de texte, d'icônes, d'images...

Selon l'invention, ce marquage se fait à l'aide d'une plaque, solidarisée de façon inamovible au pare-soleil. La spécificité de l'invention est que cette plaque n'est pas solidarisée au pare-soleil lors de la fabrication de celui-ci.

Au contraire, ce marquage peut être différé, de façon qu'il soit assuré par un importateur (plus généralement un tiers dans un pays ou dans une zone ayant une langue et/ou une législation particulière), et non par le fabricant du pare-soleil ou par le constructeur automobile. Ainsi, ni le fabricant du store, ni le constructeur automobile n'ont à se soucier d'une gestion complexe de stocks, en fonction de différents types de plaques d'information.

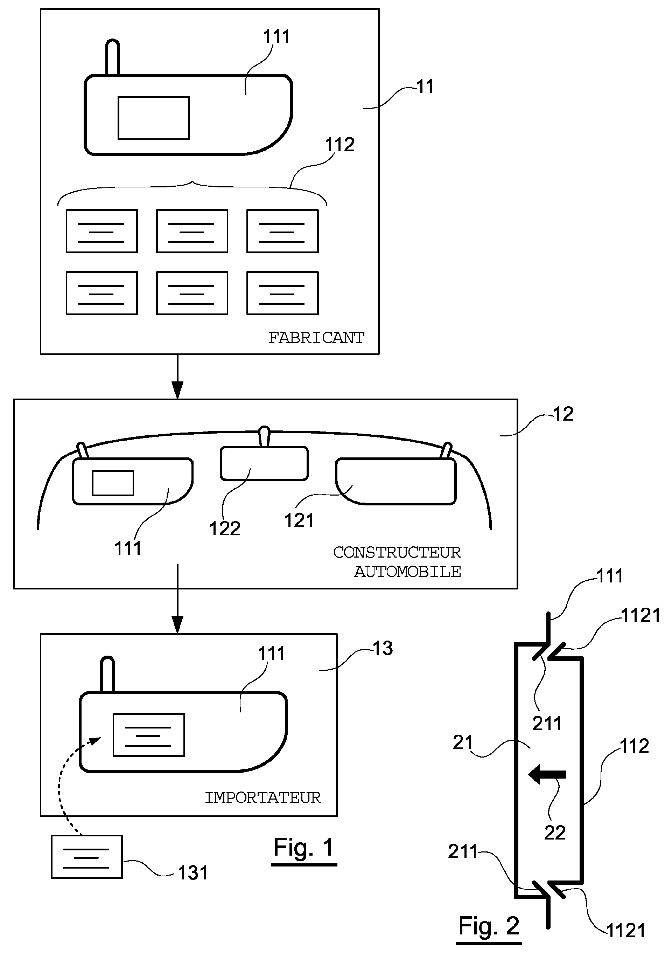

Cette approche est illustrée par la figure 1. Chez le fabricant de pare-soleil 11, on fabrique d'une part un pare-soleil 111, d'un seul type (c'est-à-dire que l'on ne réalise pas autant de types de pare-soleil qu'il y a de marquages possibles). La gestion de références et de stocks est ainsi fortement simplifiée.

Ce pare-soleil 111 se distingue des pare-soleil classiques par la présence d'un logement 1111, apte à recevoir de façon définitive une plaque d'information, et présentant donc des moyens de solidarisation (selon les modes de réalisation, les moyens de fixation pourront se trouver sur le pare-soleil, sur la plaque ou sur les deux éléments).

Par ailleurs, on réalise, ou on obtient, un jeu de plaques 112 comprenant les informations devant être appliquées sur le pare-soleil selon les différentes langues ou législations. Par exemple, dans le cas des étiquettes indiquant la présence des airbags, on pourra prévoir sept plaques correspondant à la mention souhaitée dans sept langues différentes.

Le fabricant 11 fournit au constructeur automobile 12 le pare-soleil 111, et, à part, les plaques 112. Selon une autre approche, il peut ne fournir que le pare-soleil 111. Dans ce cas, c'est l'importateur 13 lui-même qui préparera ou se procurera la plaque d'information 131.

Le constructeur automobile 12 peut alors monter le pare-soleil 111 sur le véhicule, de même que le deuxième pare-soleil 121 et le rétroviseur 122. Il n'a pas à se poser la question de la destination finale du véhicule pour choisir le bon pare-soleil parmi plusieurs. En effet, il n'utilise qu'un seul type de pare-soleil, et la différenciation sera assurée plus tard.

Le véhicule terminé est alors dirigé vers son pays de destination. Cette opération est gérée par exemple par un importateur 13, ou plus généralement par un tiers en charge de la diffusion sur un pays ou une zone donné. Cet importateur sélectionne parmi le jeu de plaques d'information 112 celle qui correspond à ses besoins, et l'assemble sur le pare-soleil 111.

Selon une autre approche, ce tiers peut obtenir lui-même la plaque d'information souhaitée 131, puis, à nouveau, assurer l'assemblage. On est ainsi sûr que c'est la plaque d'information adéquate qui est montée sur le véhicule, en fonction de sa destination finale. On peut également prévoir que le fabricant ou le constructeur fournisse au tiers un lot de plaques d'information adéquates, réalisées indépendamment des pare-soleil (c'est-à-dire sans lien direct sur le plan de la gestion des stocks).

On peut également prévoir que l'assemblage de la plaque d'information soit effectuée encore plus en amont, par exemple par les concessionnaires ou les revendeurs. Ceux-ci peuvent alors, le cas échéant, personnaliser ces plaques, par exemple en rappelant leurs coordonnées téléphoniques.

Plusieurs modes de solidarisation définitive peuvent être envisagés. La figure 2 donne un exemple de fixation envisageable.

Le pare-soleil 111 présente un logement 21, prévu pour recevoir la plaque 112. Le logement 21 présente sur l'ensemble de son périmètre, ou sur au moins deux bords parallèles, des griffes d'accrochage 211, dirigées vers l'intérieur du logement 21. Les griffes 211 peuvent s'étendre sur toute la longueur d'un côté, ou sur une ou plusieurs portions de ce coté.

La plaque 112 est quant à elle réalisée de façon à être suffisamment rigide, par exemple en matière plastique ou métallique. Elle présente des griffes 1121 dirigées vers l'extérieur, et conçues de façon à être complémentaires des griffes 211.

Il suffit alors d'approcher la plaque d'information 112 du logement 21, puis d'appuyer suffisamment dans la direction de la flèche 22 pour que les griffes 1121 viennent s'emboîter (se clipper) de façon définitive dans les griffes 211. Il n'est alors plus possible d'enlever la plaque d'information, qui est donc solidarisée de façon définitive au pare-soleil, conformément à la réglementation concernant notamment les airbags.

Cette technique permet un assemblage simple et efficace de la plaque d'information, sans l'utilisation d'outils. Bien entendu, d'autres modes de fixation peuvent être envisagés pour obtenir le même résultat de fixation définitive, de façon que la plaque d'information ne puisse pas être retirée après son assemblage avec le pare-soleil.

## Revendications

1. Pare-soleil pour véhicule automobile, **caractérisé en ce qu'**il comprend des moyens de réception d'au moins une plaque d'information, lesdits moyens de réception et/ou ladite plaque d'information comprenant des moyens de solidarisation définitive,
de façon que l'on puisse associer audit pare-soleil une plaque d'information choisie parmi au moins deux types de plaques d'information disponibles, et que ladite plaque d'information ne puisse pas être séparée dudit pare-soleil après solidarisation.

2. Pare-soleil selon la revendication 1, **caractérisé en ce que** chacun desdits types de plaques portent des informations dans une langue distincte, de façon que la solidarisation de ladite plaque puisse être différée par rapport à la fabrication et au montage dudit pare-soleil, ledit montage étant effectué par un constructeur automobile et ladite solidarisation par un tiers, ayant reçu ledit véhicule dudit constructeur.

3. Pare-soleil selon l'une quelconque des revendications 1 et 2, **caractérisé en ce qu'**il est fourni à un constructeur avec un jeu d'au moins deux plaques d'information de types distincts.

4. Pare-soleil selon l'une quelconque des revendications 1 à 3, **caractérisé en ce que** lesdits moyens de solidarisation définitive comprennent des moyens de clippage.

5. Procédé de fabrication et de montage d'un pare-soleil dans un véhicule automobile, **caractérisé en ce qu'**il comprend les étapes suivantes :
- fabrication dudit pare-soleil, comprenant la réalisation d'un logement pour au moins une plaque d'information ;
- réalisation d'au moins deux plaques d'information de types distincts ;
- montage dudit pare-soleil dans un véhicule automobile ;
- sélection d'une desdites plaques d'information, en fonction de la destination géographique dudit véhicule ;
- solidarisation de la plaque d'information sélectionnée audit pare-soleil, de façon définitive.

6. Procédé selon la revendication 5, **caractérisé en ce que** lesdites étapes sont réalisées dans au moins trois sites distincts :
- fabrication dudit pare-soleil et réalisation d'au moins deux plaques d'information distinctes dans au moins un premier site ;
- montage dudit pare-soleil sur un véhicule dans un deuxième site ;
- fixation d'une desdites plaques sur ledit pare-soleil dans un troisième site.

7. Plaque d'information prévue pour être solidarisée à un pare-soleil d'un véhicule automobile comprenant des moyens de réception de ladite plaque, **caractérisée en ce que** lesdits moyens de réception et/ou ladite plaque d'information comprend des moyens de solidarisation définitive,
de façon que l'on puisse associer audit pare-soleil une plaque d'information choisie parmi au moins deux types de plaques d'information disponibles, et que ladite plaque d'information ne puisse pas être séparée dudit pare-soleil après solidarisation.

8. Véhicule automobile comprenant au moins un pare-soleil pour véhicule automobile, **caractérisé en ce qu'**au moins un desdits pare-soleil comprend des moyens de réception d'au moins une plaque d'information, lesdits moyens de réception et/ou ladite plaque d'information comprend des moyens de solidarisation définitive,
de façon que l'on puisse associer audit pare-soleil au moins une plaque d'information choisie parmi au moins deux types de plaques d'information disponibles, et que ladite plaque d'information ne puisse pas être séparée dudit pare-soleil après solidarisation.
